(19) **Europäisches Patentamt / European Patent Office / Office européen des brevets**

(11) **EP 3 835 448 B1**

(12) # EUROPEAN PATENT SPECIFICATION

(45) Date of publication and mention of the grant of the patent:
**02.10.2024 Bulletin 2024/40**

(21) Application number: **19847417.3**

(22) Date of filing: **02.08.2019**

(51) International Patent Classification (IPC):
$C22C\ 38/04^{(2006.01)}$    $C22C\ 38/02^{(2006.01)}$
$C22C\ 38/06^{(2006.01)}$    $C22C\ 38/12^{(2006.01)}$
$C22C\ 38/08^{(2006.01)}$    $C22C\ 38/00^{(2006.01)}$
$C21D\ 8/02^{(2006.01)}$    $C21D\ 9/50^{(2006.01)}$
$C22C\ 38/10^{(2006.01)}$    $C21D\ 6/00^{(2006.01)}$
$C22C\ 38/14^{(2006.01)}$    $C22C\ 38/16^{(2006.01)}$

(52) Cooperative Patent Classification (CPC):
**C22C 38/001; C21D 6/00; C21D 8/02;
C21D 8/0226; C21D 8/0273; C21D 9/50;
C22C 38/00; C22C 38/02; C22C 38/04;
C22C 38/06; C22C 38/08; C22C 38/12;**
C21D 8/0294; C21D 2211/005; C22C 38/14;

(Cont.)

(86) International application number:
**PCT/KR2019/009679**

(87) International publication number:
**WO 2020/032493 (13.02.2020 Gazette 2020/07)**

(54) **STEEL FOR PRESSURE VESSEL HAVING EXCELLENT SURFACE QUALITY AND IMPACT TOUGHNESS, AND METHOD FOR MANUFACTURING SAME**

STAHL FÜR DRUCKBEHÄLTER MIT AUSGEZEICHNETER OBERFLÄCHENQUALITÄT UND SCHLAGZÄHIGKEIT SOWIE VERFAHREN ZU SEINER HERSTELLUNG

ACIER POUR RÉCIPIENT SOUS PRESSION AYANT UNE QUALITÉ DE SURFACE ET UNE TÉNACITÉ AU CHOC EXCELLENTES, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2018 KR 20180091841**

(43) Date of publication of application:
**16.06.2021 Bulletin 2021/24**

(73) Proprietor: **POSCO Co., Ltd
Pohang-si, Gyeongsangbuk-do 37859 (KR)**

(72) Inventors:
• **SO, Tae-Il
Gwangyang-si, Jeollanam-do 57807 (KR)**
• **KIM, Dae-Woo
Pohang-si, Gyeongsangbuk-do 37877 (KR)**

• **KANG, Sang-Deok
Gwangyang-si, Jeollanam-do 57807 (KR)**

(74) Representative: **Meissner Bolte Partnerschaft mbB
Patentanwälte Rechtsanwälte
Postfach 86 06 24
81633 München (DE)**

(56) References cited:
**EP-A1- 3 239 327**    **EP-A1- 3 336 212**
**WO-A1-2017/105107**    **WO-A1-2017/111290**
**WO-A1-2017/111416**    **WO-A1-2018/117545**
**JP-A- 2002 266 022**    **JP-A- H09 202 919**
**JP-A- H10 102 193**    **JP-A- H10 102 194**
**JP-B2- 3 842 836**    **KR-A- 20110 060 449**
**KR-A- 20130 077 906**    **KR-A- 20160 078 669**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C22C 38/16

**Description**

[Technical Field]

The present invention relates to a steel material for petrochemical production equipment, storage tanks, and the like, and more particularly, to a steel material for a pressure vessel having excellent surface quality and impact toughness and a method for manufacturing same.

[Background Art]

With recent demand for large-sized and high-capacity storage of equipment such as petrochemical production equipment and storage tanks, demand for thickening of steel materials for such equipment continues to increase. In particular, temperatures, at which toughness may be guaranteed, are gradually decreasing due to increasing demand for use of such equipment in extremely cold regions.

In addition, actual yield of steel materials used in such equipment is reduced due to surface defects such as generation of coining marks caused by scale, star cracking, or the like, which may occur during steelmaking/continuous casting or rolling, and thus, manufacturing costs are increased.

When such a steel material is welded, a post weld heat treatment (PWHT) is performed to prevent deformation of a structure after the welding, to stabilize a shape and a size, and to relieve stress generated during the welding. Such a post weld heat treatment is performed for a lengthy period to cause softening and growth of a steel sheet and coarseness of a carbonitride, so that strength and impact toughness are significantly deteriorated.

In particular, in the case of a high-strength steel material in which a microstructure includes a hard phase such as a bainite phase, a martensite phase, or a martensite-austenite (MA) phase, a base metal decreases in strength and tends to increase in ductile-to-brittle transition temperature (DBTT) through processes such as carbon re-diffusion, potential recovery, grain growth and carbide growth and precipitation, and the like, when a PWHT is performed for a lengthy period.

Patent Document 1 discloses a steel material having strength and toughness which are not reduced by forming a ferrite-bainite dual-phase microstructure and controlling a packet size of the bainite and size and amount of a carbonitride even after a PWHT is performed for a lengthy period.

However, according to Patent Document 1, a large amount of copper (Cu) is contained in an alloy composition to result in high sensitivity to occurrence of surface defects. In addition, a large amount of titanium (Ti) and a large amount of boron (B) are contained in the alloy composition, so that a value of low-temperature impact toughness is significantly decreased due to a coarse carbonitride. Accordingly, there is a limitation in simultaneously ensuring low-temperature toughness and surface quality after a PWHT. Heat treated high tensile strength steel is for example described in JP H10 102194 A, JP H10 102193 A, WO 2017/111290 A1 and WO 2017/105107 A1.

(Patent Document 1) Korean Patent Registration No. 10-1657828
(Patent Document 2) JP H10 102194 A
(Patent Document 3) JP H10 102193 A
(Patent Document 4) WO 2017/111290 A1
(Patent Document 5) WO 2017/105107 A1

[Disclosure]

[Technical Problem]

An aspect of the present invention is to provide a steel material for a pressure vessel having excellent surface quality while having excellent strength and toughness even after a post weld heat treatment (PWHT) is performed for a lengthy period, and a method of manufacturing the steel material.

[Technical Solution]

According to the present invention, a steel material for a pressure vessel having excellent surface quality and impact toughness includes, by weight percentage (wt%), 0.1 to 0.15% of carbon (C), 0.15 to 0.5% of silicon (Si), 1.2 to 1.8% of manganese (Mn), 0.01% or less (excluding 0%) of phosphorus (P), 0.01% or less (excluding 0%) of sulfur (S), 0.01 to 0.05% of aluminum (Al), 0.01 to 0.05% of niobium (Nb), 0.01 to 0.25% of nickel (Ni), 0.1% or less (excluding 0%) of copper (Cu), 0.01 to 0.1% of molybdenum (Mo), 0.01 to 0.05% of vanadium (V), 0.003% or less (excluding 0%) of titanium (Ti), 5 ppm or less (excluding 0 ppm) of boron (B), 20 to 100 ppm of nitrogen (N), and a balance of iron (Fe) and other inevitable impurities, and satisfying Relational Expression 1 below.

The steel material includes a composite structure of ferrite and bainitic ferrite as a microstructure.

$$[\text{Relational Expression 1}]$$

$$0.5 < [(Ti + Nb + B)/3.5N + (Cu/Ni)] < 2.5$$

where each element refers to a content by wt%. When a thickness of the steel material is greater than 35 mm, the steel material comprises ferrite having an area fraction of 40 to 80% and retained bainitic ferrite as a microstructure, and wherein when a thickness of the steel material is 35 mm or less, the steel material comprises ferrite having an area fraction of 20 to 60%, tempered martensite having an area fraction of 20% or less (including 0%), and retained bainitic ferrite as a microstructure, in a 1/4t point (where t refers to a thickness (mm) of the steel material), the tensile strength is 480 MPa or more, and Charpy impact absorption energy at a temperature of -50°C is 150J or more. In a 1/2t point (where t refers to a thickness (mm) of the steel material), tensile strength is 480 MPa or more, and Charpy impact absorption energy at a temperature of -50°C is 100J or more. The steel material has a thickness of 10 to 150 mm.

According to the present invention, a method of manufacturing a steel material for a pressure vessel having excellent surface quality and impact toughness includes : reheating a steel slab, having the alloy composition above and satisfying Relational Expression 1 above, to a temperature of 1050 to 1200°C, rough rolling the reheated slab within a temperature range of Ar3+100°C to 1200°C; finish hot rolling the rough-rolled slab at a temperature of Ar3+30°C or more to manufacture a hot-rolled steel sheet; air cooling the hot-rolled steel sheet to room temperature; reheating the air-cooled hot-rolled steel sheet to a temperature of Ac3 or higher, and then maintaining the reheated hot-rolled steel sheet for (1.3t+20) minutes or more (where t refers to a thickness (mm) of the steel material); cooling the hot-rolled steel sheet to room temperature at a cooling rate of 2°C/sec or more after the maintaining; performing a tempering process in which the cooled hot-rolled steel sheet is maintained within a temperature range of 600 to 700°C for (1.9t+30) minutes or more; and air cooling the hot-rolled steel sheet to room temperature after performing the tempering process.

[Advantageous Effects]

According to the present invention, a steel material for a pressure vessel, having excellent surface quality as well as excellent strength and impact toughness even after a post weld heat treatment (PWHT) is performed, may be provided.

In addition, a steel material of the present invention may be appropriately applied to petrochemical production equipment, storage tanks, and the like.

[Description of Drawings]

FIG. 1 illustrates a result obtained by observing a surface of Inventive Steel 1 and a surface of Comparative Steel 1, according to an embodiment of the present invention.

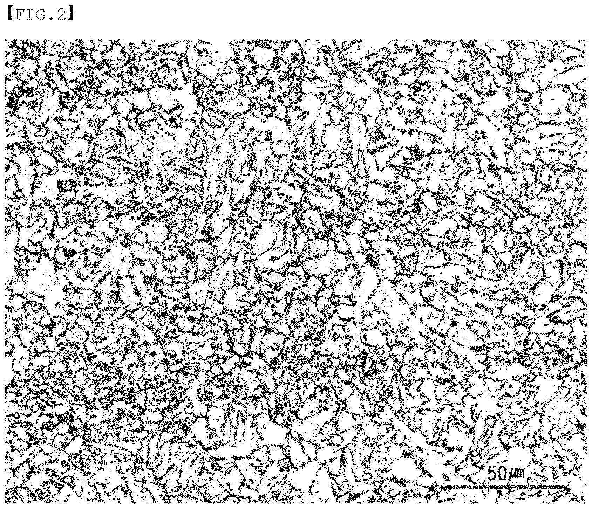

FIG. 2 illustrates a result obtained by observing a microstructure in a 1/4t point of Inventive Steel (a material having a thickness of 700 mm) according to an embodiment of the present invention.

[Best Mode for Invention]

The present inventors have conducted deep research into a steel material for a pressure vessel having improved surface quality as well as excellent strength and toughness even when a post weld heat treatment (PWHT) is performed on the steel material for a pressure vessel for a lengthy period. As a result, it is confirmed that a steel material, capable of securing target strength and tough even after a post weld heat treatment (PWHT) is performed at high temperature for a lengthy period and significantly reducing defects such as star cracking in a surface, may be provided by optimizing an alloy composition and manufacturing conditions. Based on this knowledge, the inventors have implemented the present invention.

In particular, the present inventors have found that it is necessary to control addition and composition of alloying elements so as to reduce sensitivity to occurrence of surface defects during a process of manufacturing a steel material for a pressure vessel.

Specifically, in an alloy composition of steel, copper (Cu) is effective in improving strength, but causes star cracking to occur in a surface of the steel and embrittles grain boundaries as enrichment occurs due to selective oxidation.

Therefore, a content of Cu needs to be appropriately controlled, together with nickel (Ni).

In addition, when nitrogen (N) is excessively added, there is a possibility that N may react with aluminum (Al) in the steel to form an AlN precipitate causing surface defects. To inhibit formation of such a precipitate, it is advantageous to form a carbonitride (for example, (Ti,Nb) (C,N)) or a boron compound (BN) through addition of elements such as titanium (Ti), niobium (Nb), boron (B), and the like. However, when the carbonitride is coarsely formed, the carbonitride reacts as a cracking initiation point to significantly reduce low-temperature impact toughness. For this reason, it is necessary to appropriately control contents of the elements.

Hereinafter, the present invention will be described in detail.

According to an aspect of the present invention, a steel material for a pressure vessel having excellent surface quality and impact toughness includes, by weight percentage (wt%), in detail, 0.1 to 0.15% of carbon (C), 0.15 to 0.5% of silicon (Si), 1.2 to 1.8% of manganese (Mn), 0.01% or less (excluding 0%) of phosphorus (P), 0.01% or less (excluding 0%) of sulfur (S), 0.01 to 0.05% of aluminum (Al), 0.01 to 0.05% of niobium (Nb), 0.01 to 0.25% of nickel (Ni), 0.1% or less (excluding 0%) of copper (Cu), 0.01 to 0.1% of molybdenum (Mo), 0.01 to 0.05% of vanadium (V), 0.003% or less (excluding 0%) of titanium (Ti), 5 ppm or less (excluding 0 ppm) of boron (B), and 20 to 100 ppm of nitrogen (N) .

Hereinafter, the reason for controlling the alloy components of a steel material for a pressure vessel according to the present invention will be described in detail, and unless otherwise stated, the contents of the respective components refer to weight percentage (wt%).

Carbon (C): 0.1 to 0.15%

Carbon (C) is an element effective in improving the strength of steel, and C is included in an amount of, in detail, 0.01% or more to secure sufficient strength. However, when the content of C is greater than 0.15%, low-temperature impact toughness of a base metal and a welding zone may be significantly reduced.

Therefore, in the present invention, the content of C is, in detail, 0.1 to 0.15%, and, preferably, 0.12 to 0.14%.

Silicon (Si): 0.15 to 0.5%

Silicon (Si) is used as a deoxidizer, and is an element advantageous for improving strength and toughness. When the content of Si is greater than 0.5%, low-temperature toughness may be decreased and weldability may be deteriorated. When the content of Si is less than 0.15%, a deoxidation effect may be insufficient.

Therefore, in the present invention, the content of Si is, in detail, 0.15 to 0.5%.

Manganese (Mn): 1.2 to 1.8%

Manganese (Mn) is an element advantageous for securing strength due to a solid solution strengthening effect. To this end, the content of Mn is, in detail, 1.2% or more. However, when the content of Mn is greater than 1.8%, Mn may combine with S in the steel to form MnS, causing room-temperature elongation and low-temperature toughness to be significantly reduced.

Therefore, in the present invention, the content of Mn is, in detail, 1.2 to 1.8%. More advantageously, Mn may be included in an amount of 1.3 to 1.7%.

Phosphorus (P): 0.01% or less (excluding 0%)

Phosphorus (P) is an element advantageous for securing strength and corrosion resistance of steel. However, when the content of P is significantly high, impact toughness may be significantly reduced. Accordingly, the content of P may be maintained as low as possible.

Therefore, in the present invention, the content of P is controlled to be 0.01% or less. More advantageously, the content of P may be controlled to be 0.008% or less. However, 0% is excluded in consideration of an inevitably added level of P.

Sulfur (S): 0.01% or less (excluding 0%)

Sulfur (S) is an impurity present in steel. When the content of S is greater than 0.01%, S may combine with Mn to form a non-metallic inclusions (for example, MnS), causing impact toughness of the steel to be significantly reduced.

Therefore, in the present invention, the content of S is, in detail, 0.01% or less. More advantageously, the content of S may be controlled to be 0.003% or less.

Aluminum (Al): 0.01 to 0.05%

Aluminum (Al) is an element added to deoxidize molten steel, and is included in an amount of, in detail, 0.01% or more to sufficiently obtain the deoxidation effect. However, when the content of Al is greater than 0.05%, nozzle clogging may occur during continuous casting.
Therefore, in the present invention, the content of Al is, in detail, 0.01 to 0.05%.

Niobium (Nb): 0.01 to 0.05%

Niobium (Nb) precipitates in the form of NbC or Nb(C,N) to significantly improve strength of a base metal and a welding zone. Moreover, Nb solid-solubilized during high-temperature reheating may inhibit recrystallization of austenite and transformation of ferrite or bainite to refine a structure. In addition, even in a cooling process after a rolling process, Nb may improve stability of austenite to promote formation of a hard phase such as martensite or bainite even in cooling at a low rate. Therefore, Nb is useful in securing the strength of the base metal.
To sufficiently obtain the above-described effect, Nb is included in an amount of, in detail, 0.01% or more. However, Nb is an expensive element and, when a significantly large amount of Nb is added together with Ti, coarse (Ti, Nb) (C, N) may be formed during a heating process or after a PWHT to reduce low-temperature impact toughness.
Therefore, in the present invention, the content of Nb is, in detail, 0.01 to 0.05%.

Nickel (Ni): 0.01 to 0.25%

Nickel (Ni) is an element, capable of simultaneously improving strength and toughness of the base material. To obtain such an effect, Ni is included in an amount of, in detail, 0.01% or more. Since Ni is an expensive element, it may be economically disadvantageous to include Ni in an amount of greater than 0.25%.
Therefore, in the present invention, the content of Ni is, in detail, 0.01 to 0.25%.

Copper (Cu): 0.1% or less (excluding 0%)

Copper (Cu) is an element, capable of improving strength while significantly reducing a decrease in the toughness of the base material. However, when Cu is included in a significantly large amount, surface quality of a product may be significantly deteriorated. Therefore, in the present invention, Cu is included in an amount of, in detail, 0.1% or less (excluding 0%).

Molybdenum (Mo): 0.01 to 0.1%

Molybdenum (Mo) has an effect of inducing formation of a bainite or martensite phase while significantly improving hardenability to inhibit formation of ferrite even when a small amount of Mo is added. In addition, Mo is advantageous for significantly improving the strength of the steel. To obtain such effects, Mo may be included in an amount of, in detail, 0.01% or more. However, when the content of Mo is greater than 0.1%, there is a high possibility that hardness of a welding zone may be significantly increased to reduce toughness.
Therefore, in the present invention, Mo is included in an amount of, in detail, 0.01 to 0.1%. More advantageously, Mo may be included in an amount of 0.05 to 0.08%.

Vanadium (V): 0.01 to 0.05%

Vanadium (V) is solid-solubilized at a lower temperature than other alloying elements, and may precipitate in a heat-effected zone (HAZ) to prevent a decrease in strength. Accordingly, when the strength is insufficiently secured after a post weld heat treatment (PWHT), V is included in an amount of 0.01% or more. However, when the content of V is greater than 0.05%, a fraction of a hard phase such as an MA phase may be significantly increased to deteriorate low-temperature impact toughness of a welding zone.
Therefore, V is added in an amount of 0.01 to 0.05%.

Titanium (Ti): 0.003% or less (excluding 0%)

Titanium (Ti) is an element added to reduce occurrence of surface cracking caused by the formation of AlN precipitates . However, when the content of Ti is greater than 0.003%, a coarse (Ti,Nb) (C,N) carbonitride may be formed during reheating, tempering or post weld heat treatment (PWHT) to reduce low-temperature impact toughness.
Therefore, in the present invention, the content of Ti is, in detail, 0.003% or less (excluding 0%).

Boron (B): 5ppm or less (excluding 0%)

Boron (B) is an element improving hardenability even when added in a significantly small amount. However, when the content of B is greater than 5 ppm, low-temperature impact toughness may be significantly reduced.

Therefore, in the present invention, the content of B is 5 ppm or less (excluding 0%).

Nitrogen (N): 20 to 100 ppm

When nitrogen (N) is added together with titanium (Ti), TiN precipitates may be formed to inhibit grain growth caused by welding heat affect. However, when a significantly large amount of N is added, coarse TiN may be formed to reduce low-temperature impact toughness and AlN may be formed to cause surface cracking. Therefore, N is included in an amount of, in detail, less than 100 ppm. To control the amount of N to be less than 20 ppm, a steelmaking load may be significantly increased and a grain growth inhibition effect may be insufficient.

Therefore, in the present invention, the content of N is, in detail, 20 to 100 ppm. More advantageously, N may be included in an amount of 20 to 50 ppm.

In the present invention, a balance thereof is iron (Fe) . However, in a common steel manufacturing process, unintended impurities may be inevitably incorporated from raw materials or steel manufacturing environments, so that they may not be excluded. These impurities are commonly known to a person skilled in the art, and are thus not specifically mentioned in this specification.

The steel material of the present invention, having the above-described alloy composition, satisfies a component relationship expressed by the following relationship.

In the following component relational expression, Ti, Nb, B, N, Cu, and Ni are elements affecting surface quality and low-temperature toughness of a steel material. The surface quality and the low-temperature toughness may be more advantageously improved by controlling the content of each of the above elements and controlling a content relationship of the above elements by Relational Expression 1.

In this case, when a value of Relational Expression 1 is 0.5 or less, there is a concern that an AlN precipitate may be formed by excess nitrogen to further deteriorate the surface quality and sufficient strength may not be secured. On the other hand, when the value of Relational Expression 1 is greater than 2.5, a coarse TiNb(C,N) carbonitride may be formed to increase the possibility that low-temperature impact toughness is deteriorated and star cracking occurs in a surface of the steel.

```
[Relational Expression 1]

0.5 < [(Ti + Nb + B)/3.5N + (Cu/Ni)] < 2.5
```

(where each element refers to a content by wt%)

The steel material of the present invention, satisfying the above-described alloy composition and Relational Expression 1, include, in detail, a composite structure of ferrite and bainitic ferrite as a main structure, a microstructure. Here, ferrite refers to acicular ferrite.

In particular, in the present invention, a fraction of the microstructure may be preferably controlled depending on a thickness of a steel material to be manufactured.

More specifically, when a thickness of the steel material is greater than 35 mm, a microstructure includes, in detail, ferrite having an area fraction of 40 to 80% and a balance of bainitic ferrite. Meanwhile, when the thickness of the steel material is 35 mm or less, the microstructure includes, in detail, ferrite having an area fraction of 20 to 60%, tempered martensite having an area fraction of 20% or less (including 0%), and a balance of bainitic ferrite.

When a ferrite phase is insufficiently formed in the microstructure, low-temperature impact toughness may be rapidly deteriorated. Meanwhile, when the ferrite phase is excessively formed, a target level of strength may not be secured. Accordingly, when a composite structure of ferrite and bainitic ferrite is formed as a matrix structure using a microstructure of a steel material provided by the present invention, a fraction of each phase may be preferably controlled to be within the above-described range.

In addition, the steel material of the present invention may include a carbonitride in a microstructure. In this case, the carbonitride is in the form of M(C,N), where M is at least one of Nb, Ti, and V, and a ratio of Nb is, in detail, 20% or more.

The above-described carbonitrides have an average particle diameter of, in detail, 100 nm or less. A case, in which the average particle diameter of the carbonitrides is greater than 100 nm, is not preferable because strength and toughness may be reduced.

As described above, in the present invention, a fine carbonitride may be formed to secure intended mechanical properties, in particular, excellent strength and toughness even after a PWHT and to secure excellent surface quality as well.

Specifically, the steel material of the present invention secures tensile strength of 480 MPa or more and Charpy impact absorption energy of 150J or more at a temperature of -50°C in a 1/4t point (where t refers to a thickness (mm) of the steel material) even after PWHT, and may secure excellent surface quality in which the number of star cracks in a surface of the steel material is less than or equal to 1 per unit area (50m$^2$) .

In addition, the steel material of the present invention secures a tensile strength of 480 MPa or more and Charpy impact absorption energy of 100J or more at a temperature of -50°C in a 1/2t point of the steel material after a PWHT.

Hereinafter, a method of manufacturing a steel material for a pressure vessel having excellent surface quality and impact toughness, another aspect of the present invention, will be described in detail.

A steel slab, satisfying the alloy composition and Relational Expression 1 proposed in the present invention, is manufactured and then reheated within a certain temperature range.

The steel slab may be a continuous casting slab obtained through continuous casting at a temperature of Ar3 or higher, or a forging slab obtained by forging the continuous casting slab to a thickness decreased by 10 to 60% of an initial thickness, but the present invention is not limited thereto.

In the present invention, the steel slab is reheated within a temperature range of, in detail, 1050 to 1200°C. When the reheating temperature is higher 1200°C, austenite grains may be coarsened, and thus, a target level of physical properties may not be secured. On the other hand, when the reheating temperature is less than 1050°C, it may be difficult to re-solid-solubilize a carbonitride formed in the slab.

The reheated steel slab is rough-rolled and finish hot-rolled to manufacture a hot-rolled steel sheet.

The rough rolling may be performed within a temperature range of, in detail, Ar3+100°C to 1200°C. When the rough rolling temperature is lower than Ar3+100°C, an appropriate temperature may not be secured during a subsequent finish hot rolling.

After the rough rolling is completed within the above-mentioned temperature range, the finish hot rolling is performed at a temperature of, in detail, Ar3+30°C or higher. When the temperature is lower than Ar3+30°C during the finish hot rolling, rolling load may make it difficult to perform normal hot rolling, so that a quality defect may occur.

In the present invention, Ar3 is expressed as follows:

$$Ar3 = 910 - 310C - 80Mn - 20Cu - 55Ni - 80Mo + 119V + 124Ti - 18Nb + 179Al$$

(where each element refers to a content by wt%)

The hot rolling is completed as described above, and air cooling is then performed at room temperature. The air-cooled hot-rolled steel sheet is reheated at a temperature of Ac3 or higher, in detail, within a temperature range of Ac3 or higher to 950°C or less, and then maintained at the temperature for (1.3t+20) minutes or more (where t refers to a thickness (mm) of a steel material).

The reheating may be performed to form a structure of the hot-rolled steel sheet as a single-phase structure of austenite. In this case, when the temperature is less than Ac3 or the maintaining time is less than (1.3t+20) minutes, a two-phase structure of ferrite and austenite may be formed, so that a final structure may not be obtained as a desired structure. In addition, when the reheating temperature is higher than 950°C, the austenite structure may be coarsened, so that sufficient impact toughness may not be secured.

In the present invention, Ac3 is represented as follows:

$$Ac3 = 937.2 - 436.5C + 56Si - 19.7Mn - 26.6Ni + 38.1Mo + 124.8V + 136.3Ti - 19.1Nb + 198.4Al$$

(where each element refers to a content by wt%)

The hot-rolled steel sheet, in which the structure is formed as 100% of an austenite phase by the reheating process, is quenched to room temperature at a cooling rate of 2°C/sec or higher.

In this case, when the cooling rate is lower than 2°C/sec, a size of ferrite grains or a packet of upper bainite may be coarsened, resulting in difficulty in securing target physical properties.

An upper limit of the cooling rate during the cooling is not necessarily limited, but may be limited to 100°C/sec in consideration of cooling equipment.

After the cooling is completed under the specific cooling conditions, a tempering process, in which the steel sheet is maintained within a temperature range of 600 to 700°C for (1.9t+30) minutes or more, is performed.

When the temperature is lower than 600°C during the tempering process, it may be difficult to form fine precipitates, so that a target level of strength may not be secured. On the other hand, when the temperature is higher than 700°C, coarse precipitates may be formed to reduce low-temperature toughness.

On the other hand, when the maintaining time during the tempering process within the above-described temperature range is less than (1.9t+30) minutes, a temperature of a central portion of the hot-rolled steel sheet may not reach a target temperature. Accordingly, there is not enough time to precipitate a carbide from martensite, so that low-temperature toughness may be significantly deteriorated.

After the tempering is completed, the steel sheet is air-cooled to room temperature.

The steel material of the present invention, manufactured through the above-described series of processes, may be further subjected to a post weld heat treatment (PWHT) process to relieve residual stress caused by a welding process added when the steel material is manufactured as a pressure vessel, or the like.

Conditions for the PWHT process are not necessarily limited, but the PWHT may be performed within a temperature range of 595 to 635°C for 120 minutes or more.

In general, strength and toughness of steel are deteriorated after a lengthy PWHT process. Meanwhile, strength and toughness of the steel material of the present invention are not significantly reduced even when such a PWHT process is performed.

Specifically, the steel material of the present invention secures tensile strength of 480 MPa or more and Charpy impact absorption energy of 100 J or more at a temperature of -50°C even after a PWHT.

The steel material of the present invention has a thickness of 10 to 150mm. When the thickness of the steel material of the present invention is less than 10mm, a shape defect may occur during a cooling process subsequent to a rolling or reheating process. On the other hand, when the thickness of the steel material of the present invention is greater than 150mm, a cooling rate may be insufficient during a cooling process subsequent to a reheating process, and thus, a ferrite fraction may be excessively increased to result in difficulty in securing a target level of strength.

Hereinafter, the present invention will be described more specifically through examples. However, the following examples should be considered in a descriptive sense only and not for purposes of limitation. The scope of the present invention is defined by the appended claims, and modifications and variations may be reasonably made therefrom.

[Mode for Invention]

**(Examples)**

Steel slabs, having alloy compositions listed in Table 1, were reheated within a temperature range of 1120 to 1170°C according to respective thicknesses (mm) thereof, and then finish hot-rolled at a temperature of 930 to 1000°C to prepare hot-rolled steel sheets. Each of the hot-rolled steel sheets was air-cooled to room temperature, reheated to a temperature of 910°C, and then quenched to be cooled to room temperature. Each of the cooled hot-rolled steel sheets were tempered within a temperature range of 635 to 680°C, and then air-cooled to room temperature to manufacture a steel material. Each of the steel materials was subjected to a post weld heat treatment (PWHT) in which each of the steel materials was maintained at a temperature of 615°C for 165 minutes. In this case, the PWHT was performed twice.

Manufacturing conditions based on thicknesses of steel slabs are listed in Table 2.

Table 1

| | Alloy Composition (wt%) | | | | | | | | | | | | | | RE1 | Ar3 |
|---|---|---|---|---|---|---|---|---|---|---|---|---|---|---|---|---|
| | C | Si | Mn | P | S | Al | Nb | Ni | Cu | Mo | Ti* | B* | N* | V | | |
| IS1 | 0.126 | 0.36 | 1.53 | 0.00 69 | 0.00 07 | 0.027 7 | 0.010 | 0.10 | 0.03 | 0.07 | 18 | 1 | 36 | 0.02 | 1.24 | 744.2 |
| IS2 | 0.125 | 0.46 | 1.57 | 0.00 50 | 0.00 07 | 0.031 2 | 0.010 | 0.10 | 0.01 | 0.07 | 11 | 1 | 36 | 0.02 | 0.99 | 742.3 |
| CS1 | 0.095 | 0.36 | 1.56 | 0.00 68 | 0.00 07 | 0.035 8 | 0.015 | 0.44 | 0.18 | 0.06 | 102 | 7 | 46 | 0.02 | 2.02 | 732.9 |
| CS2 | 0.104 | 0.34 | 1.53 | 0.00 54 | 0.00 10 | 0.032 4 | 0.014 | 0.33 | 0.17 | 0.05 | 169 | 6 | 47 | 0.02 | 2.43 | 739.8 |
| CS3 | 0.105 | 0.32 | 1.55 | 0.00 61 | 0.00 10 | 0.035 2 | 0.015 | 0.43 | 0.10 | 0.06 | 176 | 7 | 35 | 0.02 | 2.95 | 733.6 |

(In Table 1, each of Ti*, B*, and N* denotes a unit of component content in ppm.)

IS: Inventive Steel

CS: Comparative Steel

RE: relational expression

Table 2

| THK (mm) | HFET (°C) | FRT (°C) | Heating and Quenching | | | Tempering | | PWHT | | |
|---|---|---|---|---|---|---|---|---|---|---|
| | | | TEM (°C) | MT (min) | CR (°C/s) | TEM (°C) | MT (min) | TEM (°C) | MT (min) | Cycle |
| 12 | 1170 | 930 | 910 | 36 | 82.5 | 680 | 60 | 615 | 165 | 2 |
| 30 | 1130 | 970 | 910 | 59 | 29.7 | 670 | 105 | 615 | 165 | 2 |
| 60 | 1130 | 990 | 910 | 98 | 8.6 | 645 | 180 | 615 | 165 | 2 |
| 65 | 1130 | 990 | 910 | 105 | 7.5 | 635 | 193 | 615 | 165 | 2 |
| 70 | 1130 | 990 | 910 | 111 | 6.5 | 645 | 205 | 615 | 165 | 2 |
| 80 | 1130 | 990 | 910 | 124 | 5.1 | 645 | 230 | 615 | 165 | 2 |
| 100 | 1130 | 985 | 910 | 150 | 3.5 | 645 | 280 | 615 | 165 | 2 |
| 120 | 1120 | 1000 | 910 | 176 | 2.5 | 645 | 438 | 615 | 165 | 2 |
| 150 | 1120 | 1000 | 910 | 215 | 2.1 | 635 | 540 | 615 | 165 | 2 |
| THK: thickness<br>HFET: heating furnace extraction temperature<br>FRT: finish rolling temperature<br>TEM: temperature<br>MT: maintaining time<br>CR: cooling rate | | | | | | | | | | |

A microstructure of each ultimate steel material, on which a PWHT process was performed and completed, was observed and mechanical properties thereof were evaluated.

In each microstructure, a specimen was taken in a direction, perpendicular to a rolling direction, and then observed in a 1/4t point with an optical microscope, and then ferrite, bainitic ferrite, and martensite phases were distinguished from each other by naked eye using electron backscatter diffraction (EBSD) equipment, and then a fraction of each of the phases was measured.

Mechanical properties of a steel material corresponding to a thickness of 70 mm, among the steel materials, were measured. In this case, JIS5 standard specimens were taken in a direction, perpendicular to the rolling direction, to measure tensile strength (TS), yield strength (YS), and elongation (EI), and impact toughness (CVN), and results thereof are listed in Table 4. Each of the specimens was taken and measured in a 1/4t point and a 1/2 point in a thickness direction.

The impact toughness was evaluated by performing a Charpy V-notch impact test at a temperature of -50°C. The impact toughness was measured three times, and an average value and individual values thereof are listed.

Surfaces, for example, an upper surface and a lower surface of each steel material were inspected by naked eye to evaluate the number of star cracks per unit area ($50m^2$).

Table 3

| | Thickness (mm) | Microstructure (area%) | | |
|---|---|---|---|---|
| | | Ferrite | Bainitic Ferrite | Tempered Martensite |
| Inventive | 12 | 21.4 | 61.4 | 17.2 |

(continued)

| | Thickness (mm) | Microstructure (area%) | | |
|---|---|---|---|---|
| | | Ferrite | Bainitic Ferrite | Tempered Martensite |
| Steel 1 | 30 | 32.7 | 57.8 | 9.5 |
| | 60 | 62.1 | 37.9 | - |
| | 65 | 64.7 | 35.3 | - |
| | 70 | 67.4 | 32.6 | - |
| | 80 | 70.2 | 29.8 | - |
| | 100 | 72.9 | 27.1 | - |
| | 120 | 75.1 | 24.9 | - |
| | 150 | 78.2 | 21.8 | - |
| Inventive Steel 2 | 12 | 22.6 | 60.6 | 16.8 |
| | 30 | 34.3 | 57.3 | 8.4 |
| | 60 | 61.2 | 38.8 | - |
| | 65 | 64.2 | 35.8 | - |
| | 70 | 65.9 | 34.1 | - |
| | 80 | 71.6 | 28.4 | - |
| | 100 | 73.1 | 26.9 | - |
| | 120 | 74.6 | 25.4 | - |
| | 150 | 79.1 | 20.9 | - |
| Comparative Steel 1 | 12 | - | - | 100 |
| | 30 | - | - | 100 |
| | 60 | - | - | 100 |
| | 65 | - | 70.5 | 29.5 |
| | 70 | 62.4 | 32.2 | 5.4 |
| | 80 | 68.4 | 31.6 | - |
| | 100 | 73.1 | 26.9 | - |
| | 120 | 76.6 | 23.4 | - |
| | 150 | 76.2 | 23.8 | - |
| Comparative Steel 2 | 12 | - | - | 100 |
| | 30 | - | - | 100 |
| | 60 | - | - | 100 |
| | 65 | - | 71.3 | 28.7 |
| | 70 | 61.0 | 33.3 | 5.7 |
| | 80 | 67.2 | 32.8 | - |
| | 100 | 73.1 | 26.9 | - |
| | 120 | 75. 6 | 24.4 | - |
| | 150 | 77.9 | 22.1 | - |
| Comparative Steel 3 | 12 | - | - | 100 |
| | 30 | - | - | 100 |

(continued)

| | Thickness (mm) | Microstructure (area%) | | |
|---|---|---|---|---|
| | | Ferrite | Bainitic Ferrite | Tempered Martensite |
| | 60 | - | - | 100 |
| | 65 | - | 72.1 | 27.9 |
| | 70 | - | 93.8 | 6.2 |
| | 80 | 72.4 | 27.6 | - |
| | 100 | 76.7 | 23.3 | - |
| | 120 | 79.2 | 20.8 | - |
| | 150 | 80.4 | 19.6 | - |

Table 4

| | NOSC (/50m$^2$) | 1/4t | | | | | | 1/2t | | | | | |
|---|---|---|---|---|---|---|---|---|---|---|---|---|---|
| | | Tensile Characteristics | | | | Impact Toughness (-50°C, J) | | Tensile Characteristics | | | | Impact Toughness (-50°C, J) | |
| | | YS (MPa) | TS (MPa) | El (%) | YR | AV | IV | YS (MPa) | TS (MPa) | El (%) | YR | AV | IV |
| IS1 | 0 | 432 | 556 | 33 | 78 | 306 | 236~33 2 | 420 | 547 | 32 | 77 | 264 | 121~369 |
| IS2 | 0 | 456 | 574 | 33 | 77 | 296 | 228~31 1 | 465 | 570 | 32 | 77 | 255 | 159~326 |
| CS1 | 5 | 449 | 551 | 32 | 82 | 281 | 22~365 | 442 | 562 | 32 | 81 | 214 | 21~306 |
| CS2 | 4 | 455 | 582 | 31 | 81 | 47 | 16~102 | 451 | 579 | 31 | 81 | 35 | 11~97 |
| CS3 | 5 | 453 | 586 | 32 | 77 | 33 | 12~89 | 455 | 572 | 31 | 80 | 80 | 10~78 |
| IS: Inventive Steel CS: Comparative Steel NOSC: number of star cracks AV: average value IV: individual value | | | | | | | | | | | | | |

As illustrated in Table 3, thickness-dependent microstructures of steel materials, manufactured based on alloy compositions and manufacturing conditions proposed by the present invention, may be confirmed. Specifically, it may be confirmed that a steel material was formed to have a mixed structure of ferrite, bainitic ferrite, and tempered martensite when a thickness of the steel material was 30 mm or less, whereas a steel material was formed to have a two-phase structure of ferrite and bainitic ferrite when a thickness of the steel material was greater than 30 mm.

Comparative Steels 1 to 3, having alloy compositions which do not satisfying the present invention, were all formed to have a single-phase structure of tempered martensite because a great number of hardenability elements were contained when a thickness of a steel material was 60 mm or less, and were formed to have a composite structure of ferrite and bainitic ferrite or a composite structure of ferrite, bainitic ferrite, and tempered martensite when a thickness of a steel material was greater than 60 mm.

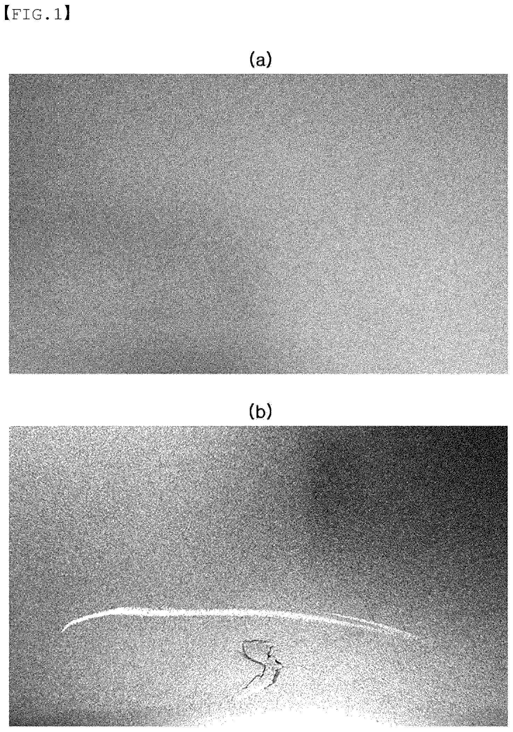

As illustrated in Table 4, Inventive Steels 1 and 2 exhibit excellent surface quality because no star crack was generated in surfaces thereof, whereas Comparative Steels 1 to 3 exhibit deteriorated surface quality because the number of generated star cracks were 5/50m$^2$, 4/50m$^2$, and 5/50m$^2$, respectively (see FIG. 1). In Comparative Steels 1 to 3, star cracks are considered to be generated because a grain boundary was embrittled due to enrichment of copper (Cu) included in a large amount.

In addition, it may be confirmed that Inventive Steels 1 and 2 had excellent strength and impact toughness in a 1/4t point and a 1/2t point in a thickness direction after a PWHT, whereas Comparative Steels 1 to 3 had deteriorated impact toughness after a PWHT. In the case of Comparative Steels 2 and 3, each having a relatively high content of titanium (Ti) as compared with Comparative Steel 1, a coarse (Ti,Nb) (C,N) carbonitride was formed as they were exposed to a high temperature for a lengthy period during a manufacturing process, and impact toughness is considered to be deteriorated because the carbonitride acted as a factor to induce cracking.

**Claims**

1. A steel material for a pressure vessel having excellent surface quality and impact toughness, the steel material comprising:

   by weight percentage (wt%), 0.1 to 0.15% of carbon (C), 0.15 to 0.5% of silicon (Si), 1.2 to 1.8% of manganese (Mn), 0.01% or less, excluding 0%, of phosphorus (P), 0.01% or less, excluding 0%, of sulfur (S), 0.01 to 0.05% of aluminum (Al), 0.01 to 0.05% of niobium (Nb), 0.01 to 0.25% of nickel (Ni), 0.1% or less (excluding 0%) of copper (Cu), 0.01 to 0.1% of molybdenum (Mo), 0.01 to 0.05% of vanadium (V), 0.003% or less (excluding 0%) of titanium (Ti), 5 ppm less, excluding 0 ppm, of boron (B), 20 to 100 ppm of nitrogen (N), and a balance of iron (Fe) and other inevitable impurities, and satisfying Relational Expression 1 below,
   wherein the steel material comprises a composite structure of ferrite and bainitic ferrite as a microstructure wherein when a thickness of the steel material is greater than 35 mm, the steel material comprises ferrite having an area fraction of 40 to 80% and as a balance retained bainitic ferrite as a microstructure, and wherein when a thickness of the steel material is 35 mm or less, the steel material comprises ferrite having an area fraction of 20 to 60%, tempered martensite having an area fraction of 20% or less, including 0 %, and a balance of retained bainitic ferrite as a microstructure, wherein in a 1/4t point, where t refers to a thickness (mm) of the steel material, the tensile strength is 480 MPa or more, and Charpy impact absorption energy at a temperature of -50°C is 150J or more. wherein in a 1/2t point, where t refers to a thickness (mm) of the steel material, tensile strength is 480 MPa or more, and Charpy impact absorption energy at a temperature of -50°C is 100J or more, whereby the Charpy value was determined according to the description, wherein the steel material has a thickness of 10 to 150 mm, whereby ferrite refers to acicular ferrite,

   $$[\text{Relational Expression 1}]$$
   $$0.5 < [(Ti + Nb + B)/3.5N + (Cu/Ni)] < 2.5$$

   where each element refers to a content by wt%.

2. The steel material of claim 1, wherein the steel material comprises an M(C,N) carbonitride having an average grain diameter of 100 nm or less in a microstructure, the M is niobium (Nb), titanium (Ti), or vanadium (V), and a ratio of the Nb is 20% or more, whereby these values were determined according to the description.

3. The steel material of claim 1, wherein the number of star cracks in a surface of the steel material is less than or equal to 1 per unit area, unit area being 50 m.

4. The steel material of claim 1, wherein the steel material is subjected to a post weld heat treatment (PWHT) .

5. A method of manufacturing a steel material for a pressure vessel having excellent surface quality and impact toughness, according to claim 1, the method comprising:

   reheating a steel slab to a temperature of 1050 to 1200°C, the steel slab including, by weight percentage (wt%), 0.1 to 0.15% of carbon (C), 0.15 to 0.5% of silicon (Si), 1.2 to 1.8% of manganese (Mn), 0.01% or less, excluding 0 %, of phosphorus (P), 0.01% or less, excluding 0 %, of sulfur (S), 0.01 to 0.05% of aluminum (Al), 0.01 to 0.05% of niobium (Nb), 0.01 to 0.25% of nickel (Ni), 0.1% or less, excluding 0 %, of copper (Cu), 0.01 to 0.1% of molybdenum (Mo), 0.01 to 0.05% of vanadium (V), 0.003% or less, excluding 0 %, of titanium (Ti), 5 ppm or less, excluding 0 %, of boron (B), 20 to 100 ppm of nitrogen (N), and a balance of iron (Fe) and other inevitable impurities, and satisfying Relational Expression 1 below;
   rough rolling the reheated slab within a temperature range of Ar3+100°C to 1200°C;
   finish hot rolling the rough-rolled slab at a temperature of Ar3+30°C or higher to manufacture a hot-rolled steel sheet;
   air cooling the hot-rolled steel sheet to room temperature;
   reheating the air-cooled hot-rolled steel sheet to a temperature of Ac3 or higher, and then maintaining the reheated hot-rolled steel sheet for (1.3t+20) minutes or more, where t refers to a thickness, in mm, of the steel material ;
cooling the hot-rolled steel sheet to room temperature at a cooling rate of 2°C/sec or higher after the maintaining;
performing a tempering process in which the cooled hot-rolled steel sheet is maintained within a temperature range of 600 to 700°C for (1.9t+30) minutes or more; and
air cooling the hot-rolled steel sheet to room temperature after performing the tempering process,

[Relational Expression 1]

$$0.5 < [(Ti + Nb + B)/3.5N + (Cu/Ni)] < 2.5$$

where each element refers to a content by wt%.

6. The method of claim 5, wherein the slab is a continuous casting slab obtained through continuous casting, or a forging slab obtained by forging the continuous casting slab to a thickness decreased by 10 to 60% of an initial thickness

7. The method of claim 5, further comprising:
performing a post weld heat treatment (PWHT) on the hot-rolled steel sheet, air-cooled to room temperature after performing the tempering process, within a temperature range of 595 to 635°C for 120 minutes or more.

**Patentansprüche**

1. Stahlmaterial für einen Druckbehälter mit ausgezeichneter Oberflächenqualität und Schlagzähigkeit, wobei das Stahlmaterial

in Gewichtsprozent (Gew.-%) 0,1 bis 0,15 % Kohlenstoff (C), 0,15 bis 0,5 % Silicium (Si), 1,2 bis 1,8 % Mangan (Mn), 0,01 % oder weniger, mit Ausnahme von 0 %, Phosphor (P), 0,01 % oder weniger, mit Ausnahme von 0 %, Schwefel (S), 0,01 bis 0,05 % Aluminium (Al), 0,01 bis 0,05 % Niob (Nb), 0,01 bis 0,25 % Nickel (Ni), 0,1 % oder weniger (mit Ausnahme von 0 %) Kupfer (Cu), 0,01 bis 0,1 % Molybdän (Mo), 0,01 bis 0,05 % Vanadium (V), 0,003 % oder weniger (mit Ausnahme von 0 %) Titan (Ti), 5 ppm oder weniger, mit Ausnahme von 0 ppm, Bor (B), 20 bis 100 ppm Stickstoff (N) und einen Rest aus Eisen (Fe) und anderen unvermeidlichen Verunreinigungen umfasst und den untenstehenden Beziehungsausdruck 1 erfüllt,
wobei das Stahlmaterial ein Verbundgefüge aus Ferrit und bainitischem Ferrit als Mikrogefüge umfasst, wobei, wenn eine Dicke des Stahlmaterials größer als 35 mm ist, das Stahlmaterial Ferrit mit einem Flächenanteil von 40 bis 80 % und als Rest bainitischen Restferrit als Mikrogefüge umfasst, und wobei, wenn eine Dicke des Stahlmaterials 35 mm oder weniger beträgt, das Stahlmaterial Ferrit mit einem Flächenanteil von 20 bis 60 %, angelassenen Martensit mit einem Flächenanteil von 20 % oder weniger, einschließlich 0 %, und einen Rest aus bainitischem Restferrit als Mikrogefüge umfasst, wobei an einem Punkt 1/4 t, wobei sich t auf eine Dicke (mm) des Stahlmaterials bezieht, die Zugfestigkeit 480 MPa oder mehr beträgt und die Charpy-Schlagabsorptionsenergie bei einer Temperatur von -50°C 150 J oder mehr beträgt, wobei an einem Punkt 1/2 t, wobei sich t auf eine Dicke (mm) des Stahlmaterials bezieht, die Zugfestigkeit 480 MPa oder mehr beträgt und die Charpy-Schlagabsorptionsenergie bei einer Temperatur von -50°C 100 J oder mehr beträgt, wobei der Charpy-Wert gemäß der Beschreibung bestimmt wurde, wobei das Stahlmaterial eine Dicke von 10 bis 150 mm aufweist, wobei sich Ferrit auf nadelförmigen Ferrit bezieht,

[Beziehungsausdruck 1]

$$0,5 < [(Ti + Nb + B)/3,5N + (Cu/Ni)] < 2,5$$

wobei sich jedes Element auf einen Gehalt in Gew.-% bezieht.

2. Stahlmaterial nach Anspruch 1, wobei das Stahlmaterial ein M(C,N)-Carbonitrid mit einem durchschnittlichen Korndurchmesser von 100 nm oder weniger in einem Mikrogefüge umfasst, wobei M Niob (Nb), Titan (Ti) oder Vanadium (V) ist und ein Anteil von Nb 20 % oder mehr beträgt, wobei diese Werte gemäß der Beschreibung bestimmt wurden.

3. Stahlmaterial nach Anspruch 1, wobei die Anzahl sternförmiger Risse in einer Oberfläche des Stahlmaterials weniger als oder gleich 1 pro Flächeneinheit beträgt, wobei die Flächeneinheit 50 m$^2$ ist.

4. Stahlmaterial nach Anspruch 1, wobei das Stahlmaterial einer Wärmebehandlung nach dem Schweißen (PWHT) unterzogen wird.

5. Verfahren zur Herstellung eines Stahlmaterials für einen Druckbehälter mit ausgezeichneter Oberflächenqualität und Schlagzähigkeit nach Anspruch 1, wobei das Verfahren Folgendes umfasst:

Wiedererwärmen einer Stahlbramme auf eine Temperatur von 1050 bis 1200 °C, wobei die Stahlbramme in Gewichtsprozent (Gew.-%) 0,1 bis 0,15 % Kohlenstoff (C), 0,15 bis 0,5 % Silicium (Si), 1,2 bis 1,8 % Mangan (Mn), 0,01 % oder weniger, mit Ausnahme von 0 %, Phosphor (P), 0,01 % oder weniger, mit Ausnahme von 0 %, Schwefel (S), 0,01 bis 0,05 % Aluminium (Al), 0,01 bis 0,05 % Niob (Nb), 0,01 bis 0,25 % Nickel (Ni), 0,1 % oder weniger, mit Ausnahme von 0 %, Kupfer (Cu), 0,01 bis 0,1 % Molybdän (Mo), 0,01 bis 0,05 % Vanadium (V), 0,003 % oder weniger, mit Ausnahme von 0 %, Titan (Ti), 5 ppm oder weniger, mit Ausnahme von 0 %, Bor (B), 20 bis 100 ppm Stickstoff (N) und einen Rest aus Eisen (Fe) und anderen unvermeidlichen Verunreinigungen beinhaltet und den untenstehenden Beziehungsausdruck 1 erfüllt;
Vorwalzen der wiedererwärmten Bramme in einem Temperaturbereich von Ar3 + 100 °C bis 1200 °C;
Fertigwarmwalzen der vorgewalzten Bramme bei einer Temperatur von Ar3 + 30 °C oder höher, um ein warmgewalztes Stahlblech zu erzeugen;
Luftkühlen des warmgewalzten Stahlblechs auf Raumtemperatur;
Wiedererwärmen des luftgekühlten warmgewalzten Stahlblechs auf eine Temperatur von Ac3 oder höher und anschließendes Halten des warmgewalzten Stahlblechs während (1,3 t + 20) Minuten oder mehr, wobei sich t auf eine Dicke des Stahlmaterials in mm bezieht;
Abkühlen des warmgewalzten Stahlblechs auf Raumtemperatur mit einer Abkühlungsrate von 2 °C/sec oder mehr nach dem Halten;
Durchführen eines Anlassprozesses, bei dem das abgekühlte warmgewalzte Stahlblech während (1,9 t + 30) Minuten oder mehr in einem Temperaturbereich von 600 bis 700 °C gehalten wird; und
Luftkühlen des warmgewalzten Stahlblechs auf Raumtemperatur nach dem Durchführen des Anlassprozesses,

[Beziehungsausdruck 1]

$$0,5 < [(Ti + Nb + B)/3,5N + (Cu/Ni)] < 2,5$$

wobei sich jedes Element auf einen Gehalt in Gew.-% bezieht.

6. Verfahren nach Anspruch 5, wobei die Bramme eine Stranggussbramme, die durch Stranggießen erhalten wird, oder eine Schmiedebramme ist, die erhalten wird, indem die Stranggussbramme auf eine Dicke geschmiedet wird, die um 10 bis 60 % einer Ausgangsdicke verringert ist.

7. Verfahren nach Anspruch 5, ferner umfassend:
Durchführen einer Wärmebehandlung nach dem Schweißen (PWHT) an dem warmgewalzten Stahlblech, das nach dem Durchführen des Anlassprozesses auf Raumtemperatur abgekühlt wurde, in einem Temperaturbereich von 595 bis 635 °C während 120 Minuten oder mehr.

**Revendications**

1. Matériau d'acier pour un récipient sous pression présentant une excellente qualité de surface et une excellente résistance au choc, le matériau d'acier comprenant :

en pourcentage en poids (% en poids), 0,1 à 0,15 % de carbone (C), 0,15 à 0,5 % de silicium (Si), 1,2 à 1,8 % de manganèse (Mn), 0,01 % ou moins, à l'exclusion de 0 %, de phosphore (P), 0,01 % ou moins, à l'exclusion de 0 %, de soufre (S), 0,01 à 0,05 % d'aluminium (Al), 0,01 à 0,05 % de niobium (Nb), 0,01 à 0,25 % de nickel (Ni), 0,1 % ou moins (à l'exclusion de 0 %) de cuivre (Cu), 0,01 à 0,1 % de molybdène (Mo), 0,01 à 0,05 % de vanadium (V), 0,003 % ou moins (à l'exclusion de 0 %) de titane (Ti), 5 ppm ou moins, à l'exclusion de 0 ppm, de bore (B), 20 à 100 ppm d'azote (N), et un reste de fer (Fe) et d'autres impuretés inévitables, et satisfaisant l'expression relationnelle 1 ci-dessous,
le matériau d'acier comprenant une structure composite de ferrite et de ferrite bainitique en tant que microstructure

dans lequel, lorsqu'une épaisseur du matériau d'acier est supérieure à 35 mm, le matériau d'acier comprend de la ferrite ayant une fraction de surface de 40 à 80 % et en tant que reste de la ferrite bainitique retenue en tant que microstructure, et dans lequel, lorsqu'une épaisseur du matériau d'acier est de 35 mm ou moins, le matériau d'acier comprend de la ferrite ayant une fraction de surface de 20 à 60 %, de la martensite revenue ayant une fraction de surface de 20 % ou moins, y compris 0 %, et un reste de ferrite bainitique retenue en tant que microstructure,

dans lequel, en un point 1/4 t, où t se réfère à une épaisseur (mm) du matériau d'acier, la résistance à la traction est de 480 MPa ou plus, et l'énergie d'absorption de l'impact Charpy à une température de -50 °C est de 150 J ou plus,

dans lequel en un point 1/2 t, où t se réfère à une épaisseur (mm) du matériau d'acier, la résistance à la traction est de 480 MPa ou plus, et l'énergie d'absorption d'impact Charpy à une température de -50 °C est de 100 J ou plus, moyennant quoi la valeur Charpy a été déterminée selon la description,

le matériau d'acier ayant une épaisseur de 10 à 150 mm, moyennant quoi la ferrite se réfère à de la ferrite aciculaire,

$$[\text{Expression relationnelle 1}]$$
$$0{,}5 < [(Ti + Nb + B)/3{,}5N + (Cu/Ni)] < 2{,}5$$

où chaque élément se réfère à une teneur en % en poids.

2. Matériau d'acier selon la revendication 1, le matériau d'acier comprenant un carbonitrure M(C,N) ayant un diamètre moyen de grain de 100 nm ou moins dans une microstructure, le M représente du niobium (Nb), du titane (Ti), ou du vanadium (V), et un rapport du Nb est de 20 % ou plus, moyennant quoi ces valeurs ont été déterminées selon la description.

3. Matériau d'acier selon la revendication 1, dans lequel le nombre de fissures en étoile dans une surface du matériau d'acier est inférieur ou égal à 1 par unité de surface, l'unité de surface étant 50 m$^2$.

4. Matériau d'acier selon la revendication 1, le matériau d'acier étant soumis à un traitement thermique post-soudure (PWHT).

5. Procédé de fabrication d'un matériau d'acier pour un récipient sous pression présentant une excellente qualité de surface et une excellente résistance au choc, selon la revendication 1, le procédé comprenant :

le réchauffage d'une brame d'acier jusqu'à une température de 1050 à 1200 °C, la brame d'acier incluant, en pourcentage de poids (% en poids), 0,1 à 0,15 % de carbone (C), 0,15 à 0,5 % de silicium (Si), 1,2 à 1,8 % de manganèse (Mn), 0,01 % ou moins, à l'exclusion de 0 %, de phosphore (P), 0,01 % ou moins, à l'exclusion de 0 %, de soufre (S), 0,01 à 0,05 % d'aluminium (Al), 0,01 à 0,05 % de niobium (Nb), 0,01 à 0,25 % de nickel (Ni), 0,1 % ou moins, à l'exclusion de 0 %, de cuivre (Cu), 0,01 à 0,1 % de molybdène (Mo), 0,01 à 0,05 % de vanadium (V), 0,003 % ou moins, à l'exclusion de 0 %, de titane (Ti), 5 ppm ou moins, à l'exclusion de 0 %, de bore (B), 20 à 100 ppm d'azote (N), et un reste de fer (Fe) et d'autres impuretés inévitables, et satisfaisant l'expression relationnelle 1 ci-dessous ;
le laminage brut de la brame réchauffée dans une plage de températures de Ar3 + 100 °C à 1200 °C ;
le laminage à chaud de finition de la brame ayant subi un laminage brut à une température de Ar3 + 30 °C ou supérieure pour fabriquer une tôle d'acier laminée à chaud ;
le refroidissement à l'air de la tôle d'acier laminée à chaud jusqu'à température ambiante ;
le réchauffage de la tôle d'acier laminée à chaud refroidie à l'air jusqu'à une température de Ac3 ou supérieure, puis le maintien de la tôle d'acier laminée à chaud réchauffée pendant (1,3 t + 20) minutes ou plus, où t se réfère à une épaisseur, en mm, du matériau d'acier ;
le refroidissement de la tôle d'acier laminée à chaud jusqu'à température ambiante à une vitesse de refroidissement de 2 °C/s ou supérieure après le maintien ;
la réalisation d'un processus de revenu dans lequel la tôle d'acier laminée à chaud refroidie est maintenue dans une plage de températures de 600 à 700 °C pendant (1,9 t + 30) minutes ou plus ; et
le refroidissement à l'air de la tôle d'acier laminée à chaud jusqu'à température ambiante après la réalisation du processus de revenu,

[Expression relationnelle 1]

$$0,5 < [(Ti + Nb + B)/3,5N + (Cu/Ni)] < 2,5$$

où chaque élément se réfère à une teneur en % en poids.

6. Procédé selon la revendication 5, dans lequel la brame est une brame de coulée continue obtenue par coulée continue, ou une brame de forgeage obtenue par forgeage de la brame de coulée continue jusqu'à une épaisseur diminuée de 10 à 60 % d'une épaisseur initiale

7. Procédé selon la revendication 5, comprenant en outre :
la réalisation d'un traitement thermique post-soudure (PWHT) sur la tôle d'acier laminée à chaud, refroidie à l'air jusqu'à température ambiante après la réalisation du processus de revenu, dans une plage de températures de 595 à 635 °C pendant 120 minutes ou plus.

[Expression relationnelle 1]

$$0,5 < [(Ti + Nb + B)/3,5N + (Cu/Ni)] < 2,5$$

【FIG.1】

(a)

(b)

【FIG.2】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10102194 A
- JP H10102193 A
- WO 2017111290 A1
- WO 2017105107 A1
- KR 101657828